# EUROPÄISCHE PATENTSCHRIFT

(11) **EP 3 018 008 B1**
(45) Veröffentlichungstag und Bekanntmachung des Hinweises auf die Patenterteilung: **22.06.2022**
(21) Anmeldenummer: 15003158.1
(22) Anmeldetag: 04.11.2015
(51) Int. Cl.: G08G 1/0967, B60R 11/00, G08G 1/16, G01S 13/93, B60W 30/14, B60W 30/00, B60R 11/06, G01S 13/931

(54) **KRAFTFAHRZEUG**
MOTOR VEHICLE
VÉHICULE AUTOMOBILE

(30) Priorität: 08.11.2014 DE 102014016581
(43) Veröffentlichungstag der Anmeldung: 11.05.2016
(73) Patentinhaber: AUDI AG, 85045 Ingolstadt (DE)
(72) Erfinder: Bouzouraa, Mohamed Essayed, DE - 85051 Ingolstadt (DE)
(74) Vertreter: Herbst, Matthias Heinz

(56) Entgegenhaltungen:
- DE-A1- 10 225 483
- DE-A1- 19 949 969
- DE-A1-102007 005 322
- DE-A1-102012 111 716
- DE-A1-102013 001 721
- DE-A1-102013 114 369
- DE-B4- 10 225 483
- DE-B4-102013 114 369
- US-A1- 2013 245 877

## Beschreibung

Die Erfindung betrifft ein Kraftfahrzeug mit wenigstens einem Sensor zum Erfassen eines Kraftfahrzeugumfelds, der mittels eines Aktors entlang einer zur Außenhaut des Kraftfahrzeugs nach innen beabstandeten Führung bewegbar ist.

Umfeldsensoren, insbesondere Radarsensoren, werden heutzutage in Kraftfahrzeugen für einen mittleren und größeren Distanzbereich eingesetzt, um andere Verkehrsteilnehmer oder größere Objekte hinsichtlich Distanz, Winkel und Relativgeschwindigkeit erfassen zu können.

Derart erfasste Daten können in ein Umfeldmodell eingehen oder auch unmittelbar Fahrzeugsystemen zur Verfügung gestellt werden. Nutzen aus Radardaten ziehen beispielsweise Längsführungssysteme, wie ein ACC (Adaptive Cruise Control), oder auch Sicherheitssysteme.

Aus US 2013/0245877 A1 ist ein Verfahren bekannt, um das Sichtfeld eines autonom fahrenden Kraftfahrzeugs zu verändern. Dazu können ausgehend von einem ersten Sichtfeld des Kraftfahrzeugs das Kraftfahrzeug oder eine zur Erfassung der Umgebung verwendete Sensoreinrichtung bewegt werden, um eine Erfassung der Umgebung in einem zweiten Sichtfeld zu ermöglichen.

DE 10 2013 114 369 A1 offenbart ein Kameramodul für ein Fahrzeug und ein Überwachungssystem, das dazu ausgebildet ist, die Umgebung des Kraftfahrzeugs in verschiedenen Richtungen durch Fotografieren zu erfassen. Dazu umfasst das Kameramodul eine Vielzahl von Linsen, welche in verschiedenen Richtungen an einem Außenumfang des Kraftfahrzeugs montiert sind, wobei eine Bildsensoreinheit des Kameramoduls über eine Führung innerhalb einer Verkleidung des Kraftfahrzeugs zwischen den verschiedenen Linsen bewegt werden kann, um Bilder von unterschiedlichen Bereichen der Umgebung des Fahrzeugs aufzunehmen.

In Kraftfahrzeugen werden immer mehr Fahrerassistenzfunktionen integriert, um den Fahrer weitgehend zu unterstützen. Die Fahrerassistenzfunktionen benötigen verschiedene Umfeldsensoren, um das Umfeld des Kraftfahrzeugs zu überwachen. Durch die steigende Zahl der Sensoren erhöhen sich die Kosten, zudem ist die Integration einer großen Anzahl von Sensoren schwierig. Demnach ist es bei einem herkömmlichen Kraftfahrzeug notwendig, für jede Fahrerassistenzfunktion bzw. für jeden Bereich des Kraftfahrzeugumfelds, der erfasst werden soll, einen oder mehrere separate Sensoren kraftfahrzeugseitig vorzusehen.

Der Erfindung liegt daher die Aufgabe zugrunde, ein Kraftfahrzeug anzugeben, bei dem die Anzahl der benötigten Sensoren verringert ist.

Diese Aufgabe wird erfindungsgemäß durch ein Kraftfahrzeug nach Anspruch 1 gelöst. Weitere vorteilhafte Ausgestaltungen ergeben sich aus den Unteransprüchen.

Vorzugsweise weist das erfindungsgemäße Kraftfahrzeug mehrere derartige Sensoren auf.

Gemäß der Erfindung kann der Sensor entlang der zur Außenhaut des Kraftfahrzeugs nach innen beabstandeten Führung bewegt werden. Der Sensor kann demnach in jede beliebige Position entlang der Führung gebracht werden, um das Umfeld des Kraftfahrzeugs zu erfassen. Somit kann die Anzahl der benötigten Sensoren dadurch reduziert werden, dass nicht jeder Sensor einen unveränderlichen festgelegten Bereich abdeckt. Stattdessen wird durch die Bewegbarkeit entlang der Führung ein größerer Bereich des Kraftfahrzeugumfelds abgedeckt. Der Sensor ist hierzu mittels eines Aktors bewegbar. Die Führung verläuft nach innen beabstandet entlang der Außenhaut des Kraftfahrzeugs. Die Führung kann daher innerhalb oder unterhalb einer Fahrzeugverkleidung bzw. innerhalb oder unterhalb der Stoßfänger des Kraftfahrzeugs verlaufen. Speziell bei als Radarsensoren ausgebildeten Sensoren wird hierdurch ermöglicht, dass das äußere Erscheinungsbild der Außenhaut des Kraftfahrzeugs nicht durch außen aufgebrachte sichtbare Sensoren beeinträchtigt wird, da diese auf der Führung unterhalb bzw. in Richtung der Mitte des Kraftfahrzeugs beabstandet von der Außenhaut angeordnet sind.

Erfindungsgemäß weist das erfindungsgemäße Kraftfahrzeug eine Steuerungseinrichtung auf, die dazu ausgebildet ist, den Aktor und/oder den Sensor, entsprechend einer Benutzereingabe und/oder einer Anforderung eines Fahrerassistenzsystems, zu steuern.

Die Steuerungseinrichtung sendet dazu Steuersignale an den Aktor, der wiederum den wenigstens einen Sensor entlang der Führung bewegt. Der Steuerungseinrichtung können hierzu Daten von einer Speichereinrichtung oder von einem Fahrerassistenzsystem zugeführt werden, die die gewünschten Erfassungspositionen für den Sensor enthalten. Es ist ebenfalls möglich den Sensor entsprechend einer Benutzereingabe zu steuern.

Beispielsweise kann hierzu durch den Benutzer ein Kreuzungsassistent als Fahrerassistenzsystem aktiviert werden, der eine möglichst vollständige Erfassung eines Kreuzungsbereichs ermöglicht. Aufgrund dieser Benutzereingabe wird der Sensor entlang der Führung erfindungsgemäß an eine der Ecken des Kraftfahrzeugs bewegt, um eine möglichst vollständige Abdeckung des Kreuzungsbereichs zu gewährleisten. Aktiviert der Benutzer dagegen das ACC, so wird der Sensor, einer Ansteuerung durch die Steuerungseinrichtung entsprechend, durch den Aktor zur Mitte des Kraftfahrzeugs bewegt, um den vorausfahrenden Verkehr zu detektieren. Dieses Prinzip ist auch auf andere im Kraftfahrzeug vorhandene Fahrerassistenzsysteme übertragbar, insbesondere auf eine Einparkhilfe, ein Fußgängerschutzsystem und einen Spurassistenten.

Zusätzlich kann die Steuerungseinrichtung dazu ausgebildet sein, wenigstens einen Parameter des wenigstens einen Sensors zu verändern. Ein Parameter des Sensors kann ein Abdeckungsbereich sein, in dem der Sensor Signale aussendet und empfängt. Dieser kann beispielsweise durch digitales Beamforming verändert werden. Ferner kann die Steuerungseinrichtung einen Öffnungswinkel des Sensors, der den Rand des Abdeckungsbereichs definiert, die Auflösung, beispielsweise in welchen Intervallen Signale von dem Sensor ausgesendet oder empfangen werden, oder die Reichweite des Sensors, innerhalb der andere Fahrzeuge oder Objekte detektiert werden, einstellen bzw. steuern.

Eine bevorzugte Weiterbildung der Erfindung sieht vor, dass der Aktor einen Elektromotor aufweist und dazu ausgebildet ist, den Sensor um wenigstens eine Achse, vorzugsweise um eine zur Führung parallele Achse und/oder eine dazu senkrechte Achse, zu drehen. Der Sensor kann somit einer Ansteuerung durch die Steuerungseinrichtung entsprechend durch den Aktor zusätzlich zu einer Bewegung entlang der Führung auch um diese oder um eine dazu senkrechte Achse gedreht werden. Dadurch kann der dreidimensionale Abdeckungsbereich des Sensors gegenüber einem starren Sensor deutlich verbessert werden. Weiterhin ist es möglich, ein erfasstes Objekt oder einen Verkehrsteilnehmer, der sich dem Fahrzeug nähert, beispielsweise bei einem Einparkvorgang, auch dann zu erfassen, wenn sich der Verkehrsteilnehmer dem Kraftfahrzeug bis auf einen geringen Abstand angenähert hat. Mit einem starr verbauten Sensor ist dies nur eingeschränkt möglich, da ein niedriges Hindernis, beispielsweise ein sich unterhalb der Stoßfänger des Kraftfahrzeugs befindendes Hindernis ab einem gewissen Minimalabstand nicht von diesem Sensor erfasst werden kann. Ebenso ist es möglich, den Sensor um eine zur Führung senkrechte Achse zu drehen, wodurch in Kombination mit der Bewegbarkeit entlang der Führung die Umgebung des Kraftfahrzeugs unter jeden Winkel erfasst werden kann.

Bevorzugt kann die Führung am Kraftfahrzeug näherungsweise in derselben Höhe wie ein Stoßfänger des Kraftfahrzeugs angeordnet sein. Dies bietet den Vorteil, dass der Sensor in einer für Kraftfahrzeuge üblichen Einbauposition eingebaut werden kann.

Eine alternative Ausgestaltung des erfindungsgemäßen Kraftfahrzeugs kann vorsehen, dass die Führung an der Unterseite oder Unterkante einer Karosserie des Kraftfahrzeugs angeordnet ist. Diese Ausführung erleichtert den Einbau bzw. die Nachrüstung der Führung. Ferner ist es bei der Anbringung der Schiene an der Unterseite oder Unterkante einer Karosserie des Kraftfahrzeugs möglich, andere Sensoren als Radarsensoren zu verwenden, da diese nicht innerhalb oder unterhalb einer Fahrzeugverkleidung angebracht sind. Dies ermöglicht z. B. den Einsatz von Kamerasensoren, Ultraschallsensoren oder Lidarsensoren.

Vorzugsweise weist das erfindungsgemäße Kraftfahrzeug wenigstens zwei, vorzugsweise vier Sensoren auf. Hierbei sind bevorzugt zwei Sensoren an der Front des Kraftfahrzeugs und zwei Sensoren am Heck des Kraftfahrzeugs angeordnet. Darüber hinaus kann es zweckmäßigerweise vorgesehen sein, dass das Kraftfahrzeug jeweils wenigstens einen seitlich am Kraftfahrzeug angeordneten Sensor aufweist. Durch jeweils zwei Sensoren an der Front, dem Heck und jeweils einen Sensor an jeder Seite des Kraftfahrzeugs kann eine 360°-Abdeckung der Umgebung des Kraftfahrzeugs erreicht werden. Durch die Bewegbarkeit der Sensoren entlang der Führung wird dabei sichergestellt, dass die einzelnen Sensoren von der Steuerungseinrichtung mittels des Aktors stets an die benötigte Erfassungsposition bewegt werden können.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: eine Draufsicht eines erfindungsgemäßen Kraftfahrzeugs;
- Fig. 2: einen Ausschnitt der Front des erfindungsgemäßen Kraftfahrzeugs von Fig. 1 bei Betrieb eines Kreuzungsassistenten;
- Fig. 3: einen Ausschnitt der Front des erfindungsgemäßen Kraftfahrzeugs von Fig. 1 bei ACC-Betrieb; und
- Fig. 4: einen Ausschnitt des Hecks des erfindungsgemäßen Kraftfahrzeugs von Fig. 1.

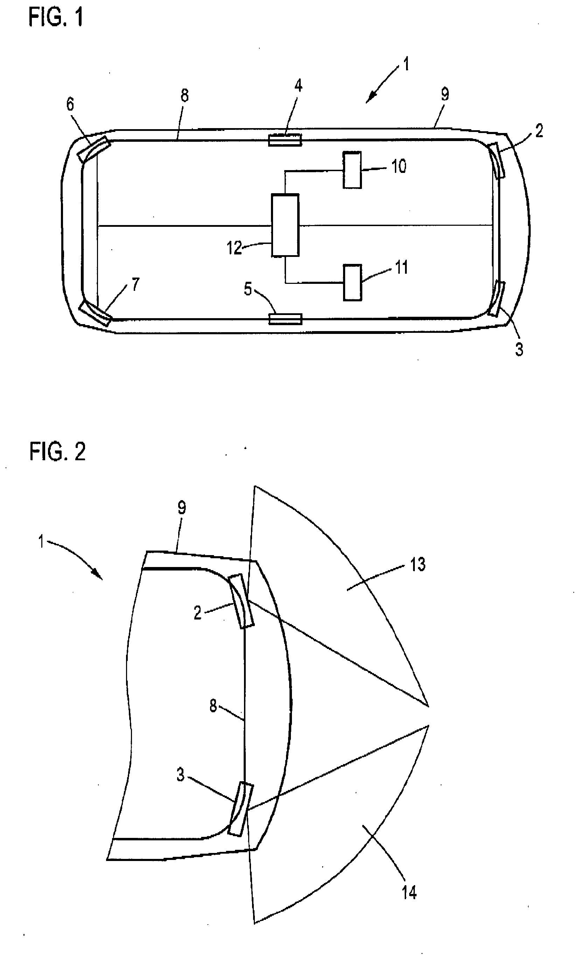

Fig. 1 zeigt ein Kraftfahrzeug 1 mit sechs Sensoren 2 - 7, die als Radarsensoren ausgebildet sind, wobei die Sensoren 2 und 3 an der Front des Kraftfahrzeugs 1, die Sensoren 4 und 5 jeweils an einer Seite des Kraftfahrzeugs 1 und die Sensoren 6 und 7 am Heck des Kraftfahrzeugs 1 angeordnet sind. Die Sensoren 2 - 7 sind auf einer Führung 8 angeordnet, die parallel zu einer Außenhaut 3 des Kraftfahrzeugs 1 nach innen beabstandet angeordnet ist. Die Führung 8 verläuft dabei im Wesentlichen parallel zur Außenhaut 9 des Kraftfahrzeugs 1. Daneben sind auch abgewandelte Ausführungen denkbar, bei denen mehrere Führungen mit einem oder mehreren Sensoren vorgesehen sind. In den Bereichen der Scheinwerfer oder ähnlichen Bereichen ist eine Abweichung von der parallelen Anordnung bauartbedingt oder bauraumbedingt möglich.

Das Kraftfahrzeug 1 weist ferner ein Betätigungselement 10 sowie ein Fahrerassistenzsystem 11 auf. In diesem Ausführungsbeispiel ist lediglich das Fahrerassistenzsystem 11 schematisch als Beispiel für die vorhandenen Fahrerassistenzsysteme dargestellt.

Die Sensoren 2 - 7 weisen jeweils einen Aktor auf, der dazu ausgebildet ist, den jeweiligen Sensor 2 - 7 entlang der Führung 8 zu bewegen und diesen um eine parallel zum jeweiligen Abschnitt der Führung 8 laufende Achse sowie eine dazu senkrecht stehende Achse zu drehen. Die Aktoren der einzelnen Sensoren 2 - 7 sind wie das Betätigungselement 10 und das Fahrerassistenzsystem 11 mit einer Steuerungseinrichtung 12 des Kraftfahrzeugs 1 verbunden.

Die Führung 8 ist diesem Ausführungsbeispiel endlos umlaufend ausgebildet. Es ist ebenso möglich für die Front und das Heck bzw. die Seiten des Kraftfahrzeugs separate, getrennte Führungen 8 vorzusehen. Die Führung 8 ist hierbei als Schiene ausgebildet und in etwa in derselben Höhe angebracht wie Stoßfänger des Kraftfahrzeugs 1, die nicht abgebildet sind. Die Verbindungslinien zwischen den Sensoren 2 - 7, dem Betätigungselement 10 und dem Fahrerassistenzsystem 11 und der Steuerungseinrichtung 12 stellen einen Fahrzeugbus dar.

Es ist sonach möglich, jeden Sensor 2 - 7 mittels des zugehörigen Aktors entlang der endlos umlaufenden Führung 8, die als Schiene ausgebildet ist, zu bewegen und um diese bzw. um eine senkrecht dazu stehende Achse zu schwenken.

Fig. 2 zeigt einen Ausschnitt der Front des Kraftfahrzeugs 1 von Fig. 1. Hierbei wurde durch Betätigen des Betätigungselements 10 durch den Fahrer das Fahrerassistenzsystem 11 aktiviert, um einen Kreuzungsassistenten auszuwählen. Der Kreuzungsassistenz ist ein Fahrerassistenzsystem. Daraufhin sendet die Steuerungseinrichtung 12 an die Aktoren der Sensoren 2, 3 Steuersignale, damit die Sensoren 2, 3 entlang der Führung 8 an die Ecken des Kraftfahrzeugs 1 bewegt werden. Die Steuerungseinrichtung 12 steuert ferner die Sensoren 2, 3 an, um Abdeckungsbereiche 13, 14 der Sensoren 2, 3 derart anzupassen, dass eine möglichst umfassende Erfassung eines Kreuzungsbereichs erfolgt. Dazu werden die Abdeckungsbereiche 13, 14 der Sensoren 2, 3 gegenüber einer Ausgangseinstellung erweitert. Hierzu wird der Öffnungswinkel der Sensoren 2, 3 vergrößert.

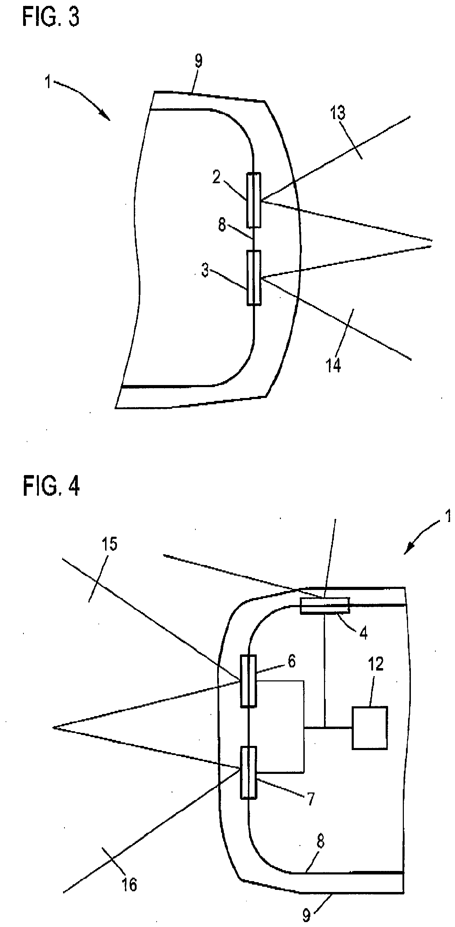

Fig. 3 zeigt einen Ausschnitt der Front des Kraftfahrzeugs 1 von Fig. 1, nachdem der Fahrer durch Betätigen des Betätigungselements 10 die ACC-Funktion des Fahrerassistenzsystems 11 ausgewählt hat. Die Steuerungseinrichtung 12 sendet daraufhin Steuersignale an die Aktoren der Sensoren 2, 3, um diese mittig an der Front des Kraftfahrzeugs 1 zu positionieren. Ferner steuert die Steuerungseinrichtung 12 die Sensoren 2, 3 derart an, dass die Abdeckungsbereiche 13, 14 der Sensoren 2, 3 im Vergleich zu dem in Fig. 2 vorliegenden Kreuzungsassistenten verschmälert werden. Gleichzeitig wird die Reichweite der Sensoren 2, 3 erhöht. Dies bietet den Vorteil, dass mit den Sensoren 2, 3 ein effektiver ACC-Betrieb realisiert werden kann, da vorausfahrende Fahrzeuge durch die höhere Reichweite der Sensoren 2, 3 sowie die schmaleren Abdeckungsbereiche 13, 14 besser detektiert werden können.

Fig. 4 zeigt einen Ausschnitt des Hecks des Kraftfahrzeugs 1 von Fig. 1. Hierbei wurde durch Betätigen des Betätigungselements 10 durch den Fahrer ein Parkassistent, der nicht Gegenstand der Ansprüche ist, als Funktion des Fahrerassistenzsystems 11 ausgewählt. Dazu werden die Sensoren 6, 7 einer Ansteuerung der Steuerungseinrichtung 12 entsprechend durch ihre Aktoren entlang der Führung 8 paarweise verstellt. Ferner werden die Reichweite und der Öffnungswinkel des Sensoren 6, 7 so angepasst, dass die Abdeckungsbereiche 15, 16 der Sensoren 6, 7 für eine Erfassung von Objekten, die sich in der Nähe des Kraftfahrzeugs 1 befinden, angepasst werden.

Um einen Parkvorgang zu erleichtern wird der Sensor 4 durch eine Ansteuerung der Steuerungseinrichtung 12 durch seinen Aktor in eine Erfassungsposition entlang der Führung 8 gebracht, die zur Abdeckung des "toten Winkels" beiträgt. Der Sensor 4 wird dazu einzeln unabhängig vom Sensor 5 bewegt. Somit kann während des Parkvorgangs eine Kollision mit einem Objekt im Rückraum des Kraftfahrzeugs 1 vermieden werden.

## Patentansprüche

1. Kraftfahrzeug (1) mit wenigstens einem Sensor (2 - 7) zum Erfassen eines Kraftfahrzeugumfelds, der mittels eines Aktors entlang einer zur Außenhaut (9) des Kraftfahrzeugs (1) nach innen beabstandeten Führung (8) bewegbar ist, wobei der Sensor (2 - 7) entlang der Führung (8) in unterschiedliche Erfassungspositionen bewegbar ist, wobei der Sensor (2 - 7) in den Erfassungspositionen zur Außenhaut (9) des Kraftfahrzeugs nach innen beabstandet ist, wobei der Sensor (2 - 7) entlang der Führung (8) in eine der Ecken des Kraftfahrzeugs (1) sowie zur Mitte des Kraftfahrzeugs (1) bewegbar ist, wobei das Kraftfahrzeug (1) eine Steuereinrichtung (12) aufweist, die dazu ausgebildet ist, den Aktor entsprechend einer Anforderung eines Fahrerassistenzsystems (11) zu steuern, wobei der Steuereinrichtung (12) Daten von einer Speichereinrichtung oder einem Fahrerassistenzsystem zugeführt werden, die die gewünschten Erfassungspositionen für den Sensor (2 - 7) enthalten, wobei bei einer Aktivierung eines Kreuzungsassistenten der Sensor (2 - 7) durch den Aktor mittels einer Ansteuerung durch die Steuereinrichtung (12) in die Ecken bewegbar ist und wobei bei einer Aktivierung eines ACC der Sensor (2 - 7) durch den Aktor mittels einer Ansteuerung durch die Steuereinrichtung (12) mittig an die Front des Kraftfahrzeugs (1) bewegbar ist.

2. Kraftfahrzeug nach Anspruch 1,
**dadurch gekennzeichnet,**
**dass** mittels der Steuerungseinrichtung (12) wenigstens ein Parameter des Sensors aus der folgenden Gruppe veränderbar ist: ein Abdeckungsbereich (13 - 16), in dem der Sensor (2 - 7) Signale aussendet und empfängt; Öffnungswinkel; Auflösung; Reichweite.

3. Kraftfahrzeug nach einem der vorangehenden Ansprüche,
**dadurch gekennzeichnet,**
**dass** der Aktor einen Elektromotor aufweist und dazu ausgebildet ist, den Sensor (2 - 7) um wenigstens eine Achse, vorzugsweise um eine zur Führung (8) parallele Achse und/oder eine dazu senkrechte Achse, zu drehen.

4. Kraftfahrzeug nach einem der vorangehenden Ansprüche,
**dadurch gekennzeichnet,**
**dass** die Führung (8) näherungsweise in derselben Höhe wie ein Stoßfänger des Kraftfahrzeugs (1) angeordnet ist.

5. Kraftfahrzeug nach einem der Ansprüche 1 bis 4,
**dadurch gekennzeichnet,**
**dass** die Führung (8) an der Unterseite oder Unterkante einer Karosserie des Kraftfahrzeugs (1) angeordnet ist.

6. Kraftfahrzeug nach einem der vorangehenden Ansprüche,
**dadurch gekennzeichnet,**
**dass** die Führung (8) als Schiene ausgebildet ist.

7. Kraftfahrzeug nach einem der vorangehenden Ansprüche,
**dadurch gekennzeichnet,**
**dass** der Sensor (2 - 7) als Radarsensor ausgebildet ist.

8. Kraftfahrzeug nach einem der vorangehenden Ansprüche,
**dadurch gekennzeichnet,**
**dass** es wenigstens zwei, vorzugsweise vier, Sensoren (2 - 7) aufweist.

9. Kraftfahrzeug nach einem der vorangehenden Ansprüche,
**dadurch gekennzeichnet,**
**dass** es zwei Sensoren an der Front des Kraftfahrzeugs (1) und zwei Sensoren am Heck des Kraftfahrzeugs (1) aufweist.

10. Kraftfahrzeug nach einem der vorangehenden Ansprüche,
**dadurch gekennzeichnet,**
**dass** es jeweils wenigstens einen seitlich am Kraftfahrzeug (1) angeordneten Sensor (2 - 7) aufweist.

## Claims

1. Motor vehicle (1) having at least one sensor (2 - 7) for detecting a vehicle environment, which is movable by means of an actuator along a guide (8) spaced to the inside from the outer skin (9) of the motor vehicle (1), wherein the sensor (2 - 7) is movable along the guide (8) into different detecting positions, wherein in the detecting positions the sensor (2 - 7) is spaced to the inside from the outer skin (9) of the motor vehicle, wherein the sensor (2 - 7) is movable along the guide (8) into one of the corners of the motor vehicle (1) as well as to the centre of the motor vehicle (1), wherein the motor vehicle (1) has a control apparatus (12) which is configured to control the actuator corresponding to a command of a driver assistance system (11), wherein data from a storage apparatus or a driver assistance system are supplied to the control apparatus (12) which contain the desired detection positions for the sensor (2 - 7), wherein in the case that a crossing assistant is activated, the sensor (2 - 7) is movable on the part of the actuator, by means of being controlled by the control apparatus (12), into the corners and wherein in the case of an activation of an ACC, the sensor (2 - 7) is movable on the part of the actuator, by means of being controlled by the control apparatus (12), centrally to the front of the motor vehicle (1).

2. Motor vehicle according to claim 1,
**characterised in**
**that** by means of the control apparatus (12) at least one parameter of the sensor from the following group can be altered: a coverage region (13 - 16) in which the sensor (2 - 7) transmits and receives signals; opening angle; resolution; range.

3. Motor vehicle according to any of the preceding claims, **characterised in**
**that** the actuator has an electric motor and is configured to rotate the sensor (2 - 7) about at least one axis, preferably about an axis parallel to the guide (8) and/or an axis perpendicular thereto.

4. Motor vehicle according to any of the preceding claims,
**characterised in**
**that** the guide (8) is arranged at virtually the same height as a bumper of the motor-vehicle (1).

5. motor vehicle according to any of claims 1 to 4
**characterised in**
**that** the guide (8) is arranged on the lower side or lower edge of a vehicle body of the motor vehicle (1).

6. Motor vehicle according to any of the preceding claims,
**characterised in**
**that** the guide (8) is in the form of a rail.

7. Motor vehicle according to any of the preceding claims,
**characterised in**
**that** the sensor (2 - 7) is in the form of a radar sensor.

8. Motor vehicle according to any of the preceding claims,
**characterised in**
**that** it has at least two, preferably four, sensors (2 - 7).

9. Motor vehicle according to any of the preceding claims,
**characterised in**
**that** it has two sensors at the front of the motor vehicle (1) and two sensors at the rear of the motor vehicle (1).

10. Motor vehicle according to any of the preceding claims,
**characterised in**
**that** it has respectively at least one sensor (2 - 7) arranged laterally on the motor vehicle (1).

## Revendications

1. Véhicule automobile (1) avec au moins un capteur (2-7) pour la détection d'un environnement de véhicule automobile qui est mobile au moyen d'un actionneur le long d'un guidage (8) espacé vers l'intérieur du revêtement extérieur (9) du véhicule automobile (1), dans lequel le capteur (2-7) est mobile le long du guidage (8) dans différentes positions de détection, dans lequel le capteur (2-7) est espacé vers l'intérieur dans les positions de détection de la peau extérieure (9) du véhicule automobile, dans lequel le capteur (2-7) est mobile le long du guidage (8) dans un des coins du véhicule automobile (1) ainsi qu'au milieu du véhicule automobile (1), dans lequel le véhicule automobile (1) présente un appareil de commande (12) qui est réalisé afin de commander l'actionneur selon une exigence d'un système d'assistance au conducteur (11), dans lequel des données d'un appareil enregistreur ou d'un système d'assistance au conducteur sont fournies à l'appareil de commande (12), lesquelles contiennent les positions de détection souhaitées pour le capteur (2-7), dans lequel lors d'une activation d'un assistant de croisement, le capteur (2-7) est mobile par l'actionneur au moyen d'une commande par l'appareil de commande (12) dans les coins et dans lequel lors d'une activation d'un ACC, le capteur (2-7) est mobile par l'actionneur au moyen d'une commande par l'appareil de commande (12) au milieu sur l'avant du véhicule automobile (1).

2. Véhicule automobile selon la revendication 1,
**caractérisé en ce que**
au moyen de l'appareil de commande (12), au moins un paramètre du capteur du groupe suivant peut être modifié : une zone de recouvrement (13-16), dans laquelle le capteur (2-7) envoie et reçoit des signaux ; angle d'ouverture ; résolution ; portée.

3. Véhicule automobile selon l'une quelconque des revendications précédentes, **caractérisé en ce que**
l'actionneur présente un moteur électrique et est réalisé afin de tourner le capteur (2-7) autour d'au moins un axe, de préférence autour d'un axe parallèle au guidage (8) et/ou d'un axe perpendiculaire à celui-ci.

4. Véhicule automobile selon l'une quelconque des revendications précédentes,
**caractérisé en ce que**
le guidage (8) est agencé approximativement à la même hauteur qu'un pare-chocs du véhicule automobile (1).

5. Véhicule automobile selon l'une quelconque des revendications 1 à 4,
**caractérisé en ce que**
le guidage (8) est agencé au niveau du côté inférieur ou de l'arête inférieure d'une carrosserie du véhicule automobile (1).

6. Véhicule automobile selon l'une quelconque des revendications précédentes,
**caractérisé en ce que**
le guidage (8) est réalisé comme rail.

7. Véhicule automobile selon l'une quelconque des revendications précédentes,
**caractérisé en ce que**
le capteur (2-7) est réalisé comme capteur radar.

8. Véhicule automobile selon l'une quelconque des revendications précédentes,
**caractérisé en ce que**
il présente au moins deux, de préférence quatre, capteurs (2-7).

9. Véhicule automobile selon l'une quelconque des revendications précédentes,
**caractérisé en ce que**
il présente deux capteurs sur l'avant du véhicule automobile (1) et deux capteurs sur l'arrière du véhicule automobile (1).

10. Véhicule automobile selon l'une quelconque des revendications précédentes,
**caractérisé en ce que**
il présente respectivement au moins un capteur (2-7) agencé latéralement sur le véhicule automobile (1).
